# EUROPEAN PATENT APPLICATION

(11) **EP 0 716 302 A2**
(43) Date of publication of application: **12.06.1996**
(21) Application number: 95116934.1
(22) Date of filing: 27.10.1995
(51) Int. Cl.: G01N 30/30

(54) **Liquid chromatography system and method for thermally stabilizing several columns of a liquid chromatography system**

(30) Priority: 10.12.1994 DE 4444081
(71) Applicant: Hewlett-Packard GmbH, D-71034 Böblingen (DE)
(72) Inventor: Anderer, Herbert, D-76337 Waldbronn (DE); Dehmer, Bernhard, D-76437 Rastatt-Rauental (DE); Dinter, Raoul, D-76229 Grötzingen (DE); Glatz, Bernd, D-71229 Leonberg (DE); Koch, Friedhelm, D-76337 Waldbronn (DE); Krämer, Karl-Heinz, D-76337 Waldbronn (DE)
(74) Representative: Harbach, Thomas

(57) **Abstract**

A method for thermally stabilizing two columns for liquid chromatography comprises the following steps: operating the first column at a first temperature which is different from the operating temperature of the second column, and transferring the sample contained in the first column to the second column by operation of switching means arranged between the two columns. In an embodiment of the invention, the first column is a pre-column (102) and the pre-column is operated, during an enrichment phase, at a first temperature lower than an operating temperature of the separation column, in order to maintain a sample at a first temperature, the sample contained in the pre-column is heated, after completion of the enrichment phase, to a second temperature higher than the operating temperature of the separation column (104), then the sample contained in the pre-column (102) is transferred to the separation column and then the sample is cooled to the operating temperature of the separation column.

## Description

### FIELD OF THE INVENTION

The present invention relates to a liquid chromatography system and a method for thermally stabilizing two or more columns of a liquid chromatography system. More specifically, the invention relates to a method for thermally stabilizing a pre-column and a separation column of a liquid chromatography system.

### BACKGROUND OF THE INVENTION

The separation process in a column of a liquid chromatograph is time-dependent, i.e., the chromatographic retention times of the sample substances to be analyzed are a function of time. The chromatographic resolution, i.e., the separation of the different peaks in the chromatogram associated with different substances, is also a function of time, so that a systematic temperature selection can be used to set the optimum conditions for a specific separation problem. To ensure repeatable chromatographic results, is it desirable for the temperature to be held constant during the separation process.

To this end, a thermally stabilized housing is employed in liquid chromatography in order to keep the bed temperature in the separation column constant. By using variable temperatures, it is possible with complex separations to optimize the bed temperature of the separation column. Various forms of thermally stabilized housings of the cited type are known, in which the temperature within the housing is essentially constant, such as a water bath, circulating-air heating/cooling, a heating jacket, etc.

The prior art includes various apparatus for thermal stabilization in liquid chromatography.

US-A-4,404,845 discloses a thermal regulator for liquid chromatographs. This regulator comprises a thermostat arrangement for the mobile phase and the separation column in a liquid chromatograph, whereby the thermostat has a heat transformer through which the mobile phase passes. The heat transformer comprises a heating and/or a cooling element and is positioned between a sample injection device and the inlet of the separation column. The heat exchanger serves to selectively heat or cool the ambient air surrounding the separation column. Thermal regulation of the mobile phase and the separation column prevents disadvantageous temperature gradients.

The registered design DE-GM-8536810 discloses an oven for setting the temperature of separation columns for high pressure liquid chromatography. In order to avoid a fluctuation of the retention times due to temperature deviations, temperature regulation of the separation column is proposed. The temperature of the separation column in this case is set by an oven consisting of a thermally heated and coolable block of a metal with high thermal conductivity and with a well for accepting one or more separation columns. A Peltier element is arranged on the heated and coolable block to allow working temperatures to be set below room temperature.

EP-A-0438618 discloses an apparatus for thermally stabilizing a mobile phase in a liquid chromatograph. This apparatus comprises a chromatographic column to which an ingoing capillary tube and an outgoing capillary tube are attached, this chromatographic column being positioned in a receptacle element that can be adjusted to a desired temperature using a temperature control unit. In order to avoid excessive temperature of the liquid directed to a detector through the outgoing capillary tube, which would lead to inaccurate measurement, it is proposed in this case to route the ingoing and outgoing capillary tubes parallel with one another for a predefined distance in order to achieve a heat exchange between the higher-temperature capillary tube leading to the detector and the lower-temperature ingoing capillary tube leading to the separation column.

In addition to the aforementioned apparatus with one separation column, there are known liquid chromatography systems that work with two separation columns, a pre-column and a separation column. In transferring the substances to be analyzed from the pre-column to the separation column, however, a more strongly elutropic eluent is required for the pre-column than for the separation column, even if the same packing material is used in both columns. This causes the dispersion in the pre-column to act as an "elutropic injection volume", whereby even well-packed pre-columns considerably reduce the overall efficiency of the liquid chromatography system. Of added disadvantage in this case are pre-columns with low efficiency and high capacity.

### SUMMARY OF THE INVENTION

In view of the prior art, it is an object of the present invention to provide a method for thermally stabilizing two columns for liquid chromatography as well as to provide a liquid chromatography system, wherein the chromatographic separation of a mixture of substances is optimized. This object is met by a method in accordance with claim 1 and by a liquid chromatography system in accordance with claim 11.

It is a further object of the invention to provide a method for thermally stabilizing a pre-column and a separation column for liquid chromatography, as well as to provide a liquid chromatography system, in both of which the separation efficiency of the liquid chromatography system is not impaired by the pre-column. This object is met by a method in accordance with Claim 2 and by a liquid chromatography system in accordance with Claim 5.

According to an embodiment of the present invention, a method is provided for thermally stabilizing a liquid chromatography system with the following steps: operation of the pre-column, during an enrichment phase for enriching a sample in the pre-column, at a first temperature lower than an operating temperature of the separation column; heating the sample contained in the pre-column, after completion of the enrichment phase, to a second temperature that is higher than the operating temperature of the separation column; transfer of the sample contained in the pre-column to the separation column; and cooling of the sample to the operating temperature of the separation column.

In the enrichment process of the invention, which employs a pre-column, the pre-column is operated at a lower temperature than the analytical (separation) column. As a result, the analytical column has a higher capacity, and the break-through of early eluting substances can be reduced or prevented.

The present invention, moreover, provides a liquid chromatography system with: a pre-column for enriching a sample; a separation column with a fluid-transfer link to the pre-column; a first heat exchanger device arranged on the pre-column and enabling independent control of the pre-column temperature; and a second heat exchanger device arranged on the separation column and enabling independent control of the separation column temperature.

The present invention provides, in an advantageous manner, a physical and electrical de-coupling of the heat exchangers of the pre- and separation columns of a liquid chromatography system, so that two separation columns, namely the pre-column and the separation column, can be operated at different temperatures, resulting in the ability to optimize the selectivity and/or separation efficiency.

Furthermore, it enables an enrichment process with high capacity and low dispersion.

It is possible to adapt the eluent temperatures to externally measured temperatures, permitting the eluent temperature to be adapted to the temperature of a detector so that its noise can be reduced (e.g., UV detectors or mass spectrometers). In addition, adapting the eluent temperatures also enables active thermal stabilization to be conducted (in contrast to passive heat exchangers), so that the dead volume can be maintained at a low level. Also, post-column reactions can be thermally stabilized. By using a column relay valve, it is possible to conduct analyses in close succession at different temperatures.

### BRIEF DESCRIPTION OF THE DRAWINGS

The following describes in greater detail preferred embodiments of the present invention with reference to the accompanying drawings, in which
- Fig. 1: shows a first embodiment of a liquid chromatography system in accordance with the present invention; and
- Fig. 2: shows a graph indicating chromatograms taken with different chromatography systems.

### DESCRIPTION OF THE PREFERRED EMBODIMENTS

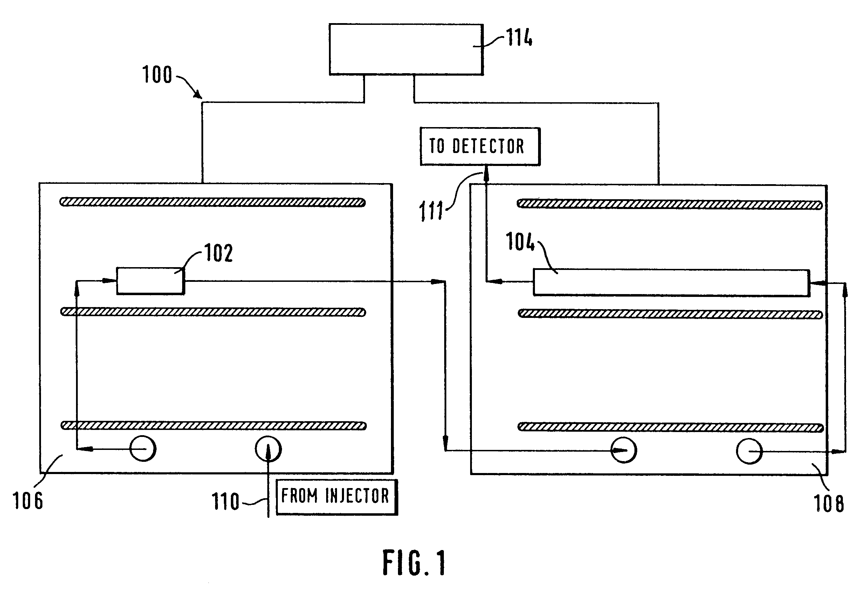

Fig. 1 shows a liquid chromatography system 100 in which a pre-column 102 for enriching the sample and a separation column 104 are arranged in a housing (not shown). In order to operate pre-column 102 and separation column 104 in the housing at two different, constant temperatures, heat exchangers 106 and 108 are arranged in the housing spatially separated from one another. First heat exchanger 106 is associated with pre-column 102, and second heat exchanger 108 is associated with separation column 104.

Pre-column 102 and separation column 104 are implemented in the preferred embodiment as capillary tubes. For accepting the pre-column 102 and separation column 104, and for transferring heat to them by radiation, heat exchangers 106, 108 are rib-shaped. In the embodiment of Fig. 1, separation column 104 has a fluid-transfer link to the pre-column.

The pre-column is charged with the sample via inlet 110. Outlet 111 of the separation column 104 is connected to a detector (not shown).

The arrangement shown in Fig. 1 permits two different temperature environments to be realized within the housing.

In order to create these temperature environments, heat exchangers 106, 108 are connected to a control 114 that enables independent control of the pre-column temperature and/or the separation column temperature.

In the illustrated embodiment, the pre-column is a 5 µ Hypersil (trademark of Shandon Southern Products Ltd. ) octadecylsilane (ODS) pre-column.

The design of the liquid chromatography system shown in Fig. 1 allows, during the enrichment phase, operation of the pre-column 102 at a temperature lower than the operating temperature of separation column 104.

After the enrichment phase, pre-column 102 and thereby the sample contained therein are heated to a second temperature higher than the operating temperature of separation column 104. As a result, the substances being analyzed in the sample elute in a gradient at a solvent composition that is less elutropic compared to the solvent composition required for prior art liquid chromatography systems with a pre-column. As a result, the sample being analyzed is transferred from the pre-column to the separation column.

The sample now passes through second heat exchanger 108, is cooled to the operating temperature of the separation column, and is concentrated again at the inlet of the separation column. In a preferred embodiment the operating temperature of the separation column is 40°C, while the second temperature of the pre-column is 70°C.

Using the liquid chromatography system and method of the invention, the band widening occurring in prior art liquid chromatography systems with a pre-column, caused by the pre-column and the connecting capillary tubes, is prevented for the most part, resulting in an increase in the separation efficiency of the liquid chromatography system.

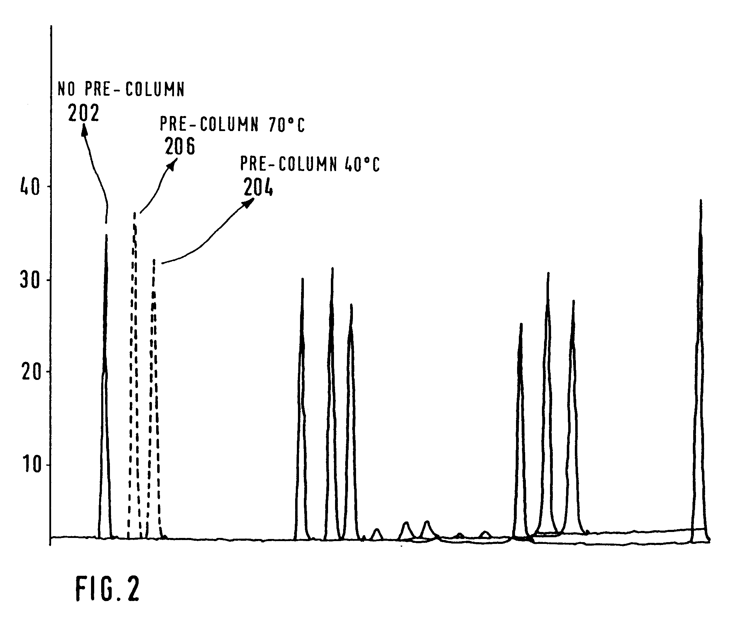

The following describes an example of the principle of the invention with reference to Fig. 2 and the accompanying table.

A dry-packed 20 x 2.1 mm 5 µ Hypersil (trademark of Shandon Southern Products Ltd. ) octadecylsilane (ODS) pre-column 102 with relatively poor efficiency is connected in series with a 100 x 2.1 mm, 5 µ Hypersil (trademark of Shandon Southern Products Ltd. ) octadecylsilane (ODS) separation column 104, as previously described with reference to Fig. 1. The following experiments were then conducted:
1) The separation efficiency of the separation column without pre-column was measured. The measure of separation efficiency in this case is the variance in minutes of four separated substances. The temperature was 40°C, and a gradient of 5 to 75% acetonitrile (ACN) (H₂O) was produced in 30 minutes.
2) The same conditions as in 1), but using a pre-column operated at 40°C.
3) The same conditions as in 2), but operating the pre-column at 70°C.

Fig. 2 and the table show the results of the experiments.

In Fig. 2, the X axis is time, the Y axis is the measurement amplitude of the system in so-called UV absorbance units. Fig. 2 shows the results of the experiments for four different substances to be detected. Peak 202 represents the experiment without pre-columns, peak 204 the experiment with pre-column in which both the pre- and separation columns are heated to 40°C, and peak 206 the experiment in which the pre-column temperature is 70°C and that of the separation column is 40°C.

For the other substances shown in Fig. 2, a corresponding sequence of peaks applies.

The characteristic variable for determining the separation efficiency is given in the table as the width of the peaks. It is clear that the pre-column considerably impairs the separation efficiency of a liquid chromatography system compared to that of a liquid chromatography system operating without a pre-column.

As experiment 3) shows, operating the pre-column at 70°C creates a focusing effect that prevents the dispersion caused by the pre-column.

In the following, further details regarding the heat exchanger in accordance with the present invention will be explained. In a preferred embodiment of the invention, the first and second heat exchanger devices are thermally decoupled, but still arranged in the same column housing, without a partition between the heat exchanger devices. The first and second heat exchanger devices can be heated or cooled independently of each other with equal or with different temperatures. A feature contributing to the thermal decoupling of the first and second heat exchanger devices is that there is no circulation of air in the column housing so that the first and second heat exchanger devices, due to their spacing and orientation, can hardly exchange heat, even though they are arranged in the same column housing.

Compared to the prior art, this arrangement provides the additional advantage that temperature applications using a single instrument can be performed where otherwise two column thermostats or a special supplementary device would be required. Furthermore, the column housing need not be changed by insertion of a partition when one goes over from single temperature operation to two-temperature operation. With the following chromatography applications, the principle of the invention can be used in a particularly advantageous way:
- Separation methods where two columns are operated at different temperatures to obtain best selectvity.
- Sample enrichment methods wherein a column for sample enrichment has to be operated at a different temperature than the separation column.
- Reduction of detector noise by the supplying the fluid , before entry into the detector, to the heat exchanger device which is not required for thermostating the separation column. In this connection, the advantage results that temperature settings for controlled heating or cooling can be preselected.

The heat exchanger devices in a preferred embodiment of the invention are characterized by a material having good heat conducting properties, by thermally well integrated fluid capillaries for pre-thermostating of the solvent/sample mixture, and by ribs for receiving the column and for heat transfer thereto. The heat exchanger devices can be heated and cooled in a controlled way. The heat transport for thermostating the separation column is accomplished via the pre-thermostated solvent, via the contact between the separation column and the heat exchanger and via heat radiation and convection between the ribs supporting the separation column.

As compared to circulating air, the described solution has the advantage that different temperature settings of the first and second heat exchanger devices are possible without negative thermal influences between these devices, even though they are arranged in the same column housing. It is an advantage of the controlled sample pre-thermostating that radial and longitudinal temperature differences of the solvent are kept as small as possible, since the temperature of the separation column and of the solvent flowing into it are substantially equal, thus avoiding a heat exchange of the solvent in the separation column which would have a negative effect on the chromatographic measurements. The controlled solvent pre-thermostating provides for precise, accurate and reproducible solvent temperature. In the prior art, this is only the case for the column space and for solvent and column bed temperatures only when using a correctly dimensioned heat exchanging capillary loop.

According to an embodiment of the invention, the heat exchanger capillaries in the first and second heat exchanger devices, respectively, have different lengths over which heat is exchanged, so that a wide range of solvent flow rates can be covered. The inlet and outlet connections of the heat exchangers are arranged such that the shortest possible connection to the separation column is achieved, thus ensuring a minimized dead volume.

It is understood that the underlying concept of the present invention cannot only be used in connection with a pre-column and a separation column, but also in connection with two (possibly different) separation columns arranged in a common housing as described above in connection with Figure 1. In such an embodiment, the separation columns are preferably connected via a column switching valve. The two columns may have different packing materials and are operated at different temperatures. The purpose of having two columns with different operating parameters (e.g. temperature) is to optimize the separation of a mixture of sample substances in that some of the substances are separated by the first column and some of the substances are separated by the second column, depending on which column provides the best separation characteristics for the specific component. The transfer of substances to a specific column and to a subsequent detector is accomplished by appropriate control of the switching valve arranged between the two columns.

The just described embodiment has the advantage that only a single column housing for both columns operated at different temperatures is required, leading to short connection paths in the apparatus, and thus ensuring a small chromatographic dead volume. Furthermore, the possibility to use different temperatures for the two columns ensures improved separation of the sample components.

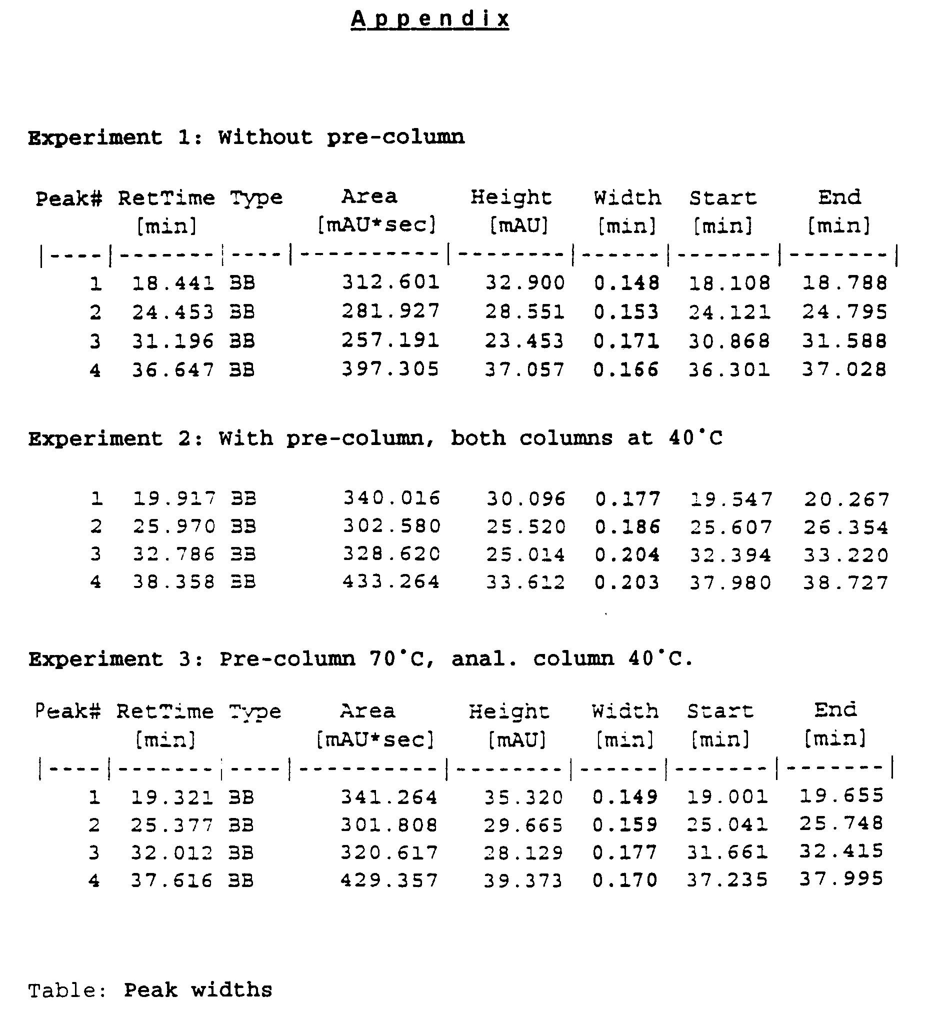

## Claims

1. A method for thermally stabilizing two columns for liquid chromatography, said columns being arranged in a common housing, with the following steps :
- operating the first column at a first temperature which is different from the operating temperature of the second column,
- transfer of the sample contained in the first column to the second column by operating switching means arranged between the two columns.

2. A method for thermally stabilizing a pre-column (102) and a separation column (104) for liquid chromatography, with the following steps:
- operation of the pre-column (102), during an enrichment phase for enriching a sample in the pre-column, at a first temperature that is lower than an operating temperature of the separation column (104);
- heating the sample contained in the pre-column (102), after completion of the enrichment phase, to a second temperature that is higher than the operating temperature of the separation column (104);
- transfer of the sample contained in the pre-column (102) to the separation column (104); and
- cooling of the sample to the operating temperature of the separation column (104).

3. Method in accordance with Claim 2, in which the operating temperature is 40°C and the second temperature is 70°C.

4. Method in accordance with Claim 2 or 3, in which the pre-column (102) and the separation column (104) are 5 µ Hypersil (trademark of Shandon Southern Products Ltd. ) octadecylsilane (ODS) columns.

5. Liquid chromatography system (100) with:
- a pre-column (102) for enriching a sample;
- a separation column (104) with a fluid-transfer link to the pre-column (102);
- a first heat exchanger device (106) arranged on the pre-column (102) and enabling independent control of the pre-column temperature; and
- a second heat exchanger device (108) arranged on the separation column (104) and enabling independent control of the separation column temperature.

6. Liquid chromatography system (100) in accordance with Claim 5, with a control device (114) connected to the first and second heat exchanger devices (106, 108), the control device in an enrichment phase maintaining the temperature of the pre-column at a first temperature lower than the operating temperature of the separation column (104), the control device after completion of the enrichment phase adjusting the pre-column temperature to a second temperature that is higher than the operating temperature of the separation column (104) in order to heat the sample to the second temperature, whereby the sample, after transfer to the separation column (104), is brought to the operating temperature of the separation column (104).

7. Liquid chromatography system (100) in accordance with Claim 6, in which the operating temperature of the separation column (104) is 40°C and the second temperature of the pre-column (102) is 70°C.

8. Liquid chromatography system (100) in accordance with one or more of Claims 5 to 7, in which the pre-column (102) and the separation column (104) are 5 µ Hypersil-ODS columns.

9. Liquid chromatography system (100) in accordance with one or more of Claims 5 to 8, in which the first and second heat exchanger devices (106, 108) are rib-shaped for accepting the pre-column (102) and separation column (104), respectively.

10. Liquid chromatography system (100) in accordance with one or more of Claims 5 to 9, in which the pre-column (102) and the separation column (104) are each implemented as capillary tubes.

11. Liquid chromatography system, comprising:
a first separation column and a second separation column arranged in a common housing,
a fluid-transfer link between both columns,
switching means arranged between in said link for selectively transferring sample from the first to the second column or to a detector,
a first heat exchanger device arranged on the first column and a second heat exchanger device arranged on the second column, and
means for enabling independent control of the temperatures of the first and second column.
